# EUROPEAN PATENT APPLICATION

(11) **EP 1 296 256 A1**
(43) Date of publication of application: **26.03.2003**
(21) Application number: 00927799.7
(22) Date of filing: 18.05.2000
(51) Int. Cl.: G06F 17/60, H01L 27/04

(54) **METHOD AND SYSTEM FOR ELECTRICAL COMMERCE OF SEMICONDUCTOR IP**

(30) Priority: 28.04.2000 JP 2000129535
(71) Applicant: Kabushiki Kaisha Toshiba, Tokyo 105-8001 (JP)
(72) Inventor: MORIYA, Satoshi, Kohoku-ku, Yokohama-shi, Kanagawa 222-00 (JP); KOBAYASHI, Hisayoshi, Mitaka-shi, Tokyo 181-0015 (JP); MIYAZAKI, Nobuyuki, Kawagoe-shi, Saitama 350-0804 (JP)
(74) Representative: Granleese, Rhian Jane
(86) International application number: JP0003174
(87) International publication number: WO01084397

(57) **Abstract**

A contract between an IP provider and IP user is intermediated through examination of a semiconductor IP provided by the IP provider (S1), registration of a semiconductor IP which has passed the examination and disclosure of the registered semiconductor IP (S2), and evaluation of a system LSI realized on the basis of a semiconductor IP selected as a purchase candidate by the IP user from the disclosed semiconductor IPs (S3).

## Description

### Technical Field

The present invention relates to a technology which uses a computer system to perform electronic commerce of a semiconductor IP (Intellectual Property) as an LSI design property. More specifically, the present invention relates to a method and system for intermediating electronic commerce of a semiconductor IP between an IP provider who provides the semiconductor IP and an IP user who uses the semiconductor IP, a semiconductor IP examination method, evaluation method, and customizing method in the system, a method by which an IP provider provides a semiconductor IP, and a method by which an IP user acquires a semiconductor IP.

### Background Art

Micropatterning in semiconductor technologies knows no limits, and a high-function, large-scale circuit conventionally called a system is now integrated on a single silicon semiconductor chip. This chip is called an SOC (System On Chip) or a system LSI (Large Scale Integrated circuit). The chip is an essential device along with software in realizing functions and services provided by digital household apparatuses such as digital TV broadcast receivers, portable information apparatuses such as cell phones and PDAs (Personal Digital Assistants), network apparatuses, and an ITS (Intelligent Transport System).

When all circuits of a system LSI are designed from the gate level, a long term of one year or more is often necessary before completion. This makes it difficult to timely provide a chip in synchronism with the development of an apparatus. To solve this problem, the concept of a semiconductor IP is introduced and beginning to be put into practical use.

A semiconductor IP means a design property (design information) of an LSI made up of semiconductors. More specifically, according to the definition by Electronic Industries Association of Japan, "a semiconductor IP is an electronic circuit block to be incorporated into a semiconductor integrated circuit and, in accordance with its form of expression, classified into one of blocks described in hardware description language (HDL) (source IP), described by logic circuit data (firm IP), and described by layout data (hard IP)". That is, semiconductor IPs are functional circuits having an arithmetic operation function such as a CPU and having a storage function such as a DRAM (Dynamic Random Access Memory), and built-in software running on these circuits.

As described above, a semiconductor IP is a reusable LSI design property, and the design term of a system LSI or the like can be greatly shortened by the effective use of this semiconductor IP. However, no effective circulation system for reusing semiconductor IPs is presently available.

For example, semiconductor IPs are developed and provided by a large number of IP providers, so semiconductor IPs not necessarily reliable in quality are also included. From the viewpoint of an IP user who wants to develop a new system LSI by using a semiconductor IP, the quality of a semiconductor IP which this user intends to purchase is unknown. The inability to evaluate the quality before a contract is a large disadvantage.

Also, in the conventional semiconductor IP circulation system, an IP user who intends to develop a certain system LSI cannot acquire necessary and sufficient information to determine a semiconductor IP which is most effective in various respects such as function and price. From the viewpoint of an IP provider, even when the provider has developed a superior semiconductor IP, no environment in which this semiconductor IP is well utilized is available.

It is, therefore, an object of the present invention to provide a semiconductor IP electronic commerce method for smoothly and effectively circulating a semiconductor IP. More specifically, it is an object of the present invention to provide an intermediation method and system for intermediating electronic commerce of a semiconductor IP between an IP provider who provides the semiconductor IP and an IP user who uses the semiconductor IP, a semiconductor IP examination method, evaluation method, and customizing method in the intermediation system, a method by which an IP provider provides a semiconductor IP, and a method by which an IP user acquires a semiconductor IP.

### Disclosure of Invention

A semiconductor IP electronic commerce intermediation method according to the present invention comprises the steps of examining a semiconductor IP provided by an IP provider, registering a semiconductor IP which has passed the examination, and disclosing the registered semiconductor IP in a predetermined format to an IP user in order to subject the semiconductor IP to selection of a semiconductor IP as a purchase candidate by the IP user. More preferably, the method further comprises the step of evaluating a system LSI realized on the basis of at least a semiconductor IP selected as a purchase candidate by the IP user from the disclosed semiconductor IPs.

In the examination step, at least one of a function check, performance check, and silicon authentication is executed for a system LSI realized on the basis of a semiconductor IP provided by an IP provider.

In the disclosure step, the registered semiconductor IP is disclosed as statistical data containing at least one of information concerning the application field, the number of transactions, and the price of the semiconductor IP, information concerning the result of examination in the examination step, and information concerning an infringement with a patent held by a third party.

In the evaluation step, a semiconductor IP to be evaluated is transported to a predetermined evaluation tool, and test data is input to the evaluation tool. Output data from the evaluation tool is compared with an expected value of the output data, thereby checking the operation of a system LSI realized on the basis of the IP data.

The semiconductor IP electronic commerce intermediation method according to the present invention can further comprise the IP customizing service step of executing a service for receiving a customizing request from an IP user, customizing IP data purchased by the IP user, and transmitting the obtained customized data to the IP user.

This IP customizing service step comprises executing at least one of a designing process which includes addition of a circuit and a partial design change of a circuit for a system LSI realized by the IP data purchased by the IP user, in accordance with instruction contents indicated by the customizing request, and a technology conversion process which includes conversion of the design rule of the system LSI in accordance with instruction contents indicated by the customizing request.

A semiconductor IP examination method according to the present invention comprises, in order to examine a semiconductor IP transmitted from an IP provider who provides the semiconductor IP, the step of performing a function check for a system LSI realized on the basis of the semiconductor IP, the step of performing a performance check for the system LSI realized on the basis of the semiconductor IP, and the silicon authentication step of fabricating a system LSI sample by mounting a circuit on a silicon semiconductor chip on the basis of circuit pattern data included in the semiconductor IP, and checking the operation of the system LSI.

A semiconductor IP disclosure method according to the present invention comprises, in order to disclose information concerning a semiconductor IP transmitted from an IP provider who provides the semiconductor IP, disclosing the information concerning the semiconductor IP as statistical data containing at least one of information concerning the application field, the number of transactions, and the price of the semiconductor IP, information concerning the result of examination, and information concerning an infringement with a patent held by a third party.

A semiconductor IP evaluation method according to the present invention comprises, in order to evaluate a semiconductor IP transmitted from an IP provider who provides the semiconductor IP, the steps of transporting at least a portion of a semiconductor IP to be evaluated to a predetermined evaluation tool, and inputting test data to the evaluation tool to compare output data from the evaluation tool with an expected value of the output data, thereby checking the operation of a system LSI realized on the basis of the IP data.

Another semiconductor IP evaluation method according to the present invention comprises the steps of transporting a semiconductor IP to be evaluated to a predetermined evaluation tool, incorporating, into the evaluation tool, uniquely designed circuit data transmitted from an IP user who uses the semiconductor IP, and inputting test data to the evaluation tool to compare output data from the evaluation tool with an expected value of the output data, thereby checking the operation of a system LSI realized on the basis of the IP data combined with the uniquely designed circuit data.

A semiconductor IP customizing method according to the present invention comprises the steps of receiving a customizing request from an IP user and performing a designing process which includes addition of a circuit and a partial design change of a circuit for a system LSI realized by the IP data purchased by the IP user, in accordance with instruction contents indicated by the customizing request, and performing a technology conversion process which includes conversion of the design rule of the system LSI realized by the IP data purchased by the IP user, in accordance with instruction contents indicated by the customizing request, wherein the customized data is transmitted to the IP user.

A semiconductor IP providing method according to the present invention is a method of providing a semiconductor IP from an IP provider who provides the semiconductor IP to an IP user who uses the semiconductor IP, comprising requesting an IP intermediation service provider for intermediating electronic commerce of a semiconductor IP between the IP provider and the IP user to examine the semiconductor IP, registering a semiconductor IP which has passed the examination and disclosing the semiconductor IP to the IP user by the IP intermediation service provider, making a contract with the IP user for a semiconductor IP selected from the disclosed semiconductor IPs by the IP user through the intermediation of the IP intermediation service provider, and providing to the IP user the semiconductor IP for which the contract is made.

A semiconductor IP acquiring method according to the present invention is a method by which an IP user who uses a semiconductor IP acquires the semiconductor IP from an IP provider who provides the semiconductor IP, comprising selecting a desired semiconductor IP as a purchase candidate from semiconductor IPs registered and disclosed after being examined by an IP intermediation service provider who intermediates semiconductor IP electronic commerce between the IP provider and IP user, requesting the IP intermediation service provider to evaluate the desired semiconductor IP selected, and receiving the evaluation result from the IP intermediation service provider, finally determining from the evaluation result whether to purchase the semiconductor IP as the purchase candidate, and acquiring the semiconductor IP to be purchased by making a contract with the IP provider through the intermediation of the IP intermediation service provider.

### Brief Description of Drawings

FIG. 1 is a block diagram showing the whole configuration of a semiconductor IP electronic commerce system according to an embodiment of the present invention;
FIG. 2 is a flow chart showing an outline of the flow of processing in the embodiment;
FIG. 3 is a flow chart showing details of the flow of processing in an examination step in the embodiment;
FIG. 4 is a flow chart showing details of the flow of processing in a registration/disclosure step in the embodiment;
FIG. 5 is a flow chart showing details of the flow of processing in an evaluation step in the embodiment; and
FIG. 6 is a flow chart showing details of the flow of processing in a value-added service step in the embodiment.

### Best Mode for Carrying Out of the Invention

An embodiment of the present invention will be described below with reference to the accompanying drawing.

### (Whole Configuration of System)

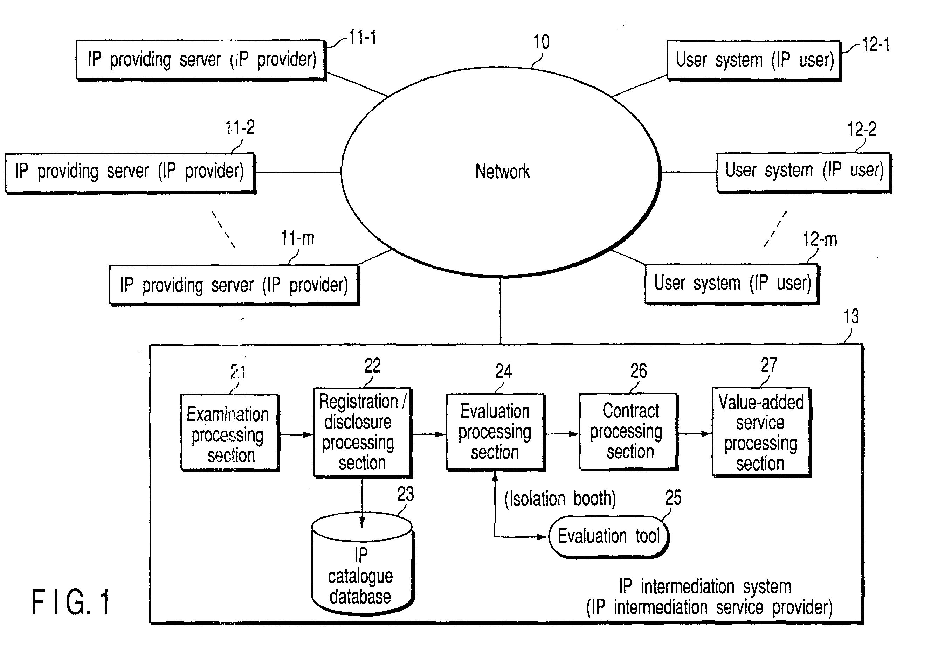

FIG. 1 is a block diagram showing the whole configuration of a semiconductor IP electronic commerce system according to an embodiment of the present invention. A network 10 is a computer network represented by the Internet. The system of the present invention executes electronic commerce of a semiconductor IP (to be referred to as IP data hereinafter) across this network 10.

To this network 10, a plurality of IP providing servers 11 (11-1, 11-2, ···, 11-m), a plurality of user systems 12 (12-1, 12-2, ···, 12-n), and an IP intermediation system 13 are connected. The IP providing servers 11 are managed by a plurality of IP providers who develop IP data and provide it to IP users, and are constructed by computer systems.
The user systems 12 are computer systems managed by IP users who use acquired IP data to develop various new system LSIs.

The IP intermediation system 13 is a server system managed by an IP intermediation service provider who performs an intermediation service (front end service) for making an IP data sales contract between an IP provide and IP user, and a value-added service (back end service) after that. This server system is constructed by one or a plurality of computer systems. The semiconductor IP electronic commerce system of this embodiment is not open to non-members: only IP providers and IP users registered as members can use IP data electronic commerce services and related services via the IP intermediation system 13.

The IP intermediation system 13 includes an examination processor 21, registration/disclosure processor 22, IP catalogue database 23, evaluation processor 24, evaluation tool 25, contract processor 26, and value-added service processor 27. These examination processor 21, registration/disclosure processor 22, evaluation processor 24, contract processor 26, and value-added service processor 27 can each have a server to manage processing, or can manage processing together by a single server.

The examination processor 21 examines IP data provided by an IP provider for a plurality of items, and finally determines whether the IP data has passed the examination. Practical examples of the examination items will be described later.

IP data which has passed the examination is formally registered as IP data as an object of commerce by the registration/disclosure processor 22. The registered IP data is converted into statistical data having a predetermined format as will be described later, and disclosed to IP users as it is stored as an IP catalogue in the IP catalogue database 23. From the IP data thus disclosed as the IP catalogue, an IP user can select, as a purchase candidate, IP data suitable for a system LSI which the user is going to develop.

Of the IP data registered by the registration/disclosure processor 22 and disclosed as the IP catalogue, IP data which an IP user desires to purchase is evaluated by the evaluation processor 24 by using the evaluation tool 25. This evaluation processor 24 is installed in an externally inaccessible environment, i.e., in an isolation booth. A practical evaluation method in this evaluation processor will be described in detail later. Note that the mechanism can also be one with which the IP catalogue can be browsed by non-member IP users.

If the IP user determines to purchase the IP data after the evaluation, the IP intermediation system 13 intermediates a contract between this IP user and an IP provider as the supply source of the IP data. For example, a contract is made between the IP user and the IP provider as the supply source of the IP data via the contract processor 26. After that, the IP intermediation system 13 performs a value-added service in accordance with the desire of the IP user. As an example, the value-added service processor 27 performs various value-added services.

### (Definition of IP data)

IP data (semiconductor IP) mentioned in this embodiment will be defined below. As described earlier, a semiconductor IP or IP data is an LSI design property and is basically one of a source IP by which an LSI is described in hardware description language (HDL), a firm IP by which an LSI is described by logic circuit data, and a hard IP by which an LSI is described by layout data. The hard IP (hardware IP) represents functional blocks (a core and cell) as hardware. Drive software for operating functional blocks and middleware form a soft IP (software IP). IP data also includes the design specifications and instruction manual (use manual) of an LSI. These design specifications and instruction manual can be either documents (paper documents) written on paper sheets or electronic document data (electronic documents).

### (Outline of Semiconductor IP Electronic Commerce)

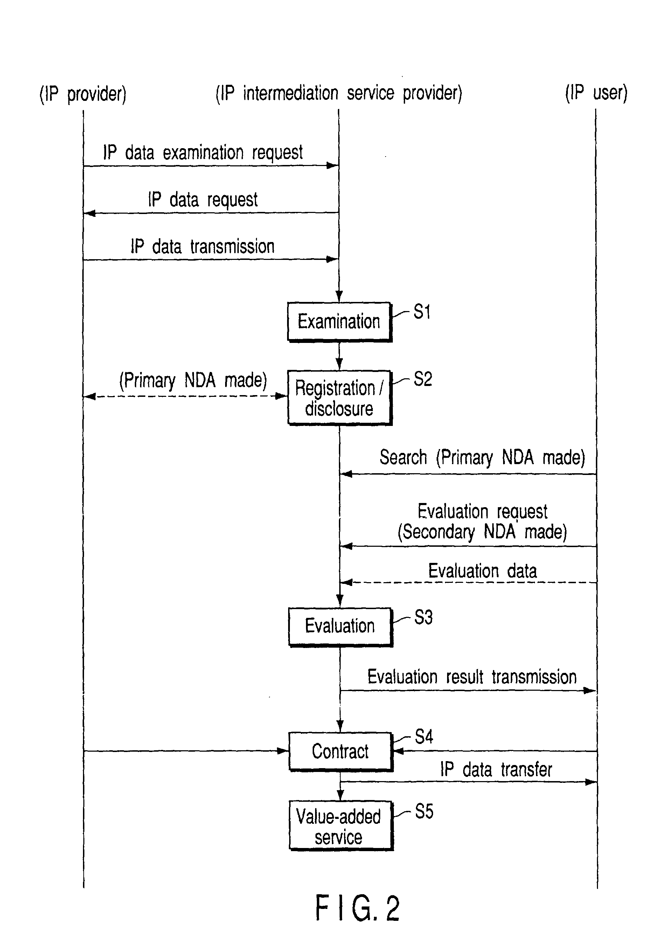

An outline of the flow of semiconductor IP electronic commerce processing in this embodiment will be explained below with reference to a flow chart shown in FIG. 2. To simplify the explanation, FIG. 2 shows the flow of processing by exchange between an IP provider, IP user, and IP intermediation service provider. However, actual signal and information exchange is performed across the network 10 between the IP providing servers 11, user systems 12, and IP intermediation system 13 shown in FIG. 1, each implemented by a computer system.

When the IP provider has developed new IP data, this IP provider transmits, to the IP intermediation service provider, an IP data examination request for examining the IP data. Upon receiving this examination request, the IP intermediation service provider issues an IP data request to the IP provider who has requested the examination. In response to this IP data request, the IP provider transmits the IP data to be examined to the IP intermediation service provider. The IP intermediation service provider may also receive the IP data when requested to examine the IP data by the IP provider.

The IP intermediation service provider uses the examination processor 21 to examine the IP data transmitted along with the examination request from the IP provider (step S1). Then, the registration/disclosure processor 22 registers the IP data which has passed the examination. This registered IP data is converted into statistical data and disclosed in the form of an IP catalogue to the IP user (step S2). In this case, the IP intermediation service provider can also make a primary NDA (Non-Disclosure Agreement) with the IP provider as indicated by the broken line.

The IP user browses the IP catalogue and searches for the registered IP data (step S3). Note that only an IP user who has already made the primary NDA with the IP intermediation service provider can access the IP data. An IP user who has made this primary NDA takes the responsibility of not leaking any information obtained from the found IP data to other people.

By thus searching for IP data, the IP user can make a primary decision on purchase of IP data, e.g., can select a purchase candidate. The IP data registered in the IP intermediation service provider is examined data. Compared to information pertaining to IP data which an IP user can obtain from an IP provider by direct negotiation, information of the IP catalogue as statistical data is valuable objective data. Therefore, the reliability of the IP data which the IP user wants to purchase is very high.

Next, the IP user transmits, where necessary, to the IP intermediation service provider an evaluation request for the IP data as a purchase candidate. This evaluation request can be issued only by an IP user who has made a secondary NDA with the IP intermediation service provider. When receiving this evaluation request, the IP intermediation service provider evaluates the IP data chosen as a purchase candidate by the IP user, by using the evaluation tool 25 in the evaluation processor 24 present in the isolation booth (step S4). Since this evaluation of the IP data is done in the isolation booth, it is possible to prevent an IP user to obtain IP data without purchasing it.

The IP user can also evaluate a uniquely designed circuit developed by the user by using the evaluation processor 24 present in the isolation booth in the IP intermediation service provider or by causing the IP intermediation service provide to execute the evaluation for the user. In the former case, the IP user installs data concerning the uniquely designed circuit as evaluation data into the evaluation tool 25 and evaluates the circuit. In the latter case, the IP user transmits data concerning the uniquely designed circuit as evaluation data to the IP intermediation service provider, and the IP intermediation service provider transmits the evaluation result to the IP user.

If the IP user obtains a satisfactory result as the result of evaluation of the IP data as a purchase candidate, the contract processor 26 makes a contract of the IP data through the intermediation of the IP intermediation service provider (step S5).
The processing so far is the front end service. After that, a value-added service as the back end service is suitably performed by the value-added service processor 27 in accordance with the desire of the IP user or the like (step S6).

Detailed process contents of examination step S1, registration/disclosure step S2, evaluation step S3, and value-added service step S5 shown in FIG. 2 will be explained below by using flow charts.

### (Examination Step S1)

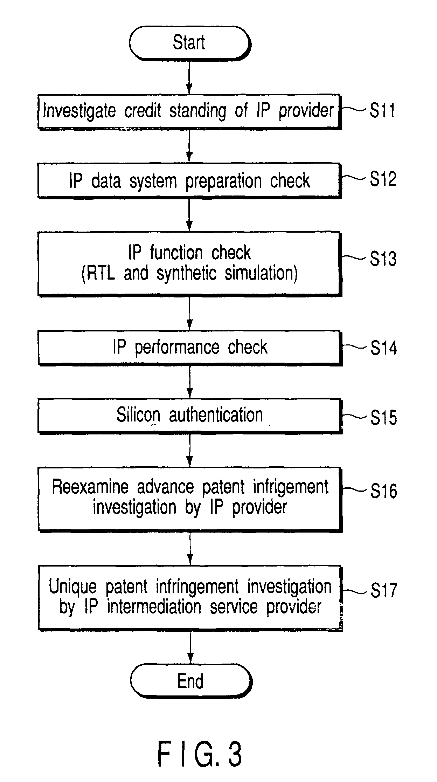

FIG. 3 shows the procedure of IP data examination performed by the examination processor 21. In this examination, the examination processor 21 first investigates the credit standing of an IP provider who has transmitted an IP data examination request to the IP intermediation service provider (step S11). This investigation of the credit standing can be omitted when the system is not open to non-members as in this embodiment. However, it is desirable to perform this inquiry into the financial status because the conditions of member registration for an IP provider may be indulgent or the credit standing of even an IP provider registered as a member may lower owing to the financial status of this IP provider or changes in conditions such as engineer resources.

Next, a system preparation check for the IP data is performed (step S12). This check is a systematic examination for checking whether minimum necessary data as IP data is prepared.

Subsequently, an IP function check is performed (step S13). This is to check the basic functions of a system LSI realized on the basis of the IP data. For example, this check is done by an operation check on RTL (Register Transfer Level) or by synthetic simulation.

An IP performance check is then executed (step S14). This is to check the performance and specifications of the system LSI realized on the basis of the IP data. This check is accomplished by software.

After that, silicon authentication is performed (step S15). This silicon authentication is to actually fabricate the system LSI sample by mounting a circuit on a silicon semiconductor chip on the basis of circuit pattern data included in the IP data, and check the system LSI at the actually used clock frequency and under other actual operating conditions. By this check, a very reliable examination can be performed.

If the IP provider has previously investigated the infringement of the IP data provided by this IP provider with a patent held by a third party, the IP intermediation service provider reexamines this infringement investigation (step S16). This reexamination checks whether the results of determination of infringement/non-infringement with the patents held by the third parties as objects of the patent infringement investigation performed by the IP provider are proper. Patents herein mentioned which pertain to the IP data are, e.g., apparatus patents, software-related patents, and fabrication method patents concerning the system LSI fabricated on the basis of the IP data.

Finally, the IP intermediation service provider performs its own patent infringement investigation (step S17). This patent infringement investigation may be performed regardless of the presence/absence of the advance patent infringement investigation by the IP provider, or may be performed only when the determination result indicates non-infringement in the advance patent infringement investigation or in the reexamination in step S16.

Preferably, only IP data which has passed the whole examination as described above is transferred to next registration/disclosure step S2. Examination step S1 does not always include all the steps shown in FIG. 3, i.e., some steps may also be omitted. For example, steps S11, S12, S16, and S17 except for steps S13 to S15 as examination of IP data itself may be omitted. The order of the processes in the individual steps shown in FIG. 3, particularly, the order of steps S13 to S15 may also be appropriately changed.

Silicon authentication step S15 is very effective in increasing the reliability of IP data. However, it is sometimes satisfactory, from heuristics or the like, to perform only the function check and performance check in steps S13 and S14, depending on the type of IP data. In a case like this, silicon authentication step S15 can be omitted. In examination step S2, IP data which has finally passed the examination may also be rated.

### (Registration/Disclosure Step S2)

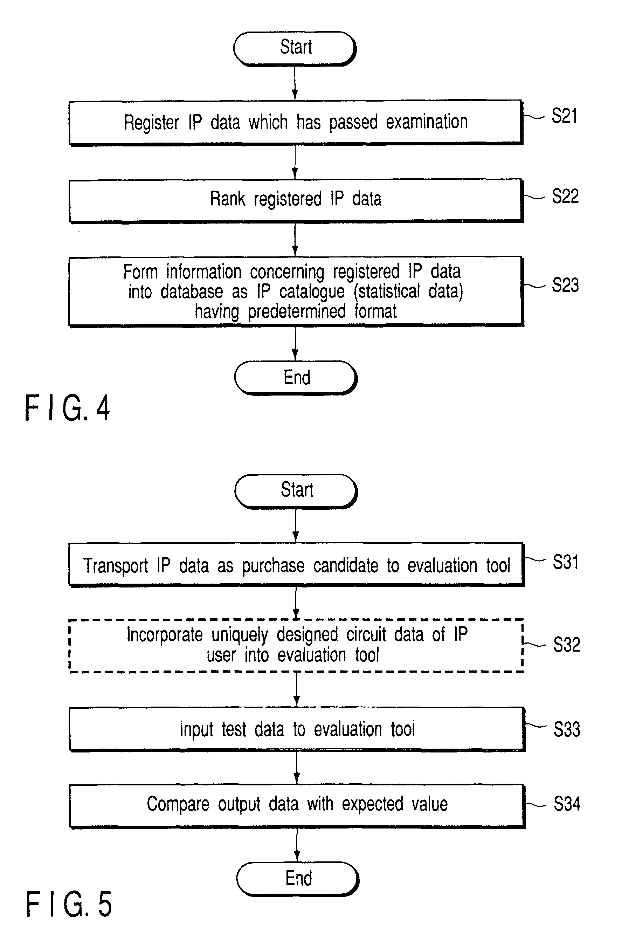

FIG. 4 shows the procedure of registration and disclosure of IP data performed by the registration/disclosure processor 22. First, IP data which has passed the examination in examination step S1 is registered (step S21). This registration is done by storing the IP data which has passed the examination into an internal large-capacity memory of the registration/disclosure processor 22. IP data which has failed to pass the examination is not registered and, of course, not disclosed, and hence is not subjected to search by IP users. Accordingly, from IP data which have passed the examination and have quality guaranteed to a certain degree, each IP user can efficiently search for IP data suited to a system LSI which this IP user intends to develop.

Next, the registered IP data is ranked, although this processing is not always necessary (step S22). This ranking process is performed, on the basis of the results of the examination in examination step S1, by ranking IP data of the same kind provided by different IP providers mainly from the viewpoint of quality, or by ranking each IP data which has passed the examination by tree-stage or five-stage evaluation. By this ranking, an IP user can find out IP data which is more preferable as a purchase candidate.

Subsequently, information pertaining to the registered IP data is converted into statistical data having a predetermined format, and this statistical data is stored as an IP catalogue in the database 23 and disclosed (step S23). Examples of the statistical data used as the IP catalogue are as follows.
(a) Application fields of IP data (applied products)
(b) The number of transactions of IP data (the cumulative number of data sold in the past)
(c) Price information of IP data (the average sales price, and the sales form such as licensing/lump sum payment)
(d) Examination results of IP data (particularly, performance check results and the like)
(e) Patent information (results of determination of infringement/non-infringement with third-party patents)

As the statistical data, not all of (a) to (e) are always necessary. For example, (b) and (c) are omitted for IP data which has not been traded (sold) in the past. In short, the statistical data need only be information useful when an IP user searches for IP data and determines a purchase candidate. Therefore, one or more of (a) to (e) can be omitted, or data other than (a) to (e) can be included.

### (Evaluation Step S3)

FIG. 5 shows the procedure of evaluating IP data performed by the evaluation processor 24. This evaluation is done by using the evaluation tool 25. First, from the IP catalogue disclosed in step S2, IP data selected as a purchase candidate by an IP user is transported to the evaluation tool 25 (step S31). This evaluation tool 25 is practically an emulator or simulator, and the transportation is performed by incorporating IP data into this evaluation tool 25. Consequently, the evaluation tool 25 emulates or simulates a system LSI realized on the basis of the IP data.

Then, test data is input to the evaluation tool 25 after step S32 (to be described later) is performed where necessary (step S33). The test data is specific binary pattern data similar to data generally used in tests in the LSI fabrication process. When this test data is input to the evaluation tool 25, output data depending on the internal state of the evaluation tool 25 is generated. That is, when the pattern of the test data and the state which the evaluation tool 25 is supposed to have are determined, an expected value of the output data is also determined.

Accordingly, the IP data is evaluated by comparing the output data from the evaluation tool 25 with its expected value (step S34). If the output data is equal to the expected value or if the output value is within the allowable range of the expected value, this means that the system LSI realized on the basis of the IP data as an object of evaluation normally operates.

In evaluation step S3, the processing of step S32 is performed as needed. In this step S32, the IP intermediation service provider evaluates the state of operation when a circuit uniquely designed for a system LSI which an IP user is going to develop (e.g., a partial circuit of this system LSI) is combined with IP data which this IP user wants to purchase.

First, the IP user transmits, to the IP intermediation service provider, an evaluation request as shown in FIG. 2 and uniquely designed circuit data as evaluation data. This evaluation data received by the IP intermediation service provider is incorporated into the evaluation tool 25 to which the IP data as a purchase candidate is transported in step S31. The evaluation tool 25 emulates or simulates the system LSI realized by the IP data combined with the evaluation data concerning the uniquely designed circuit. In this state, therefore, following the same procedures as above, the test data is input to the evaluation tool 25 (step S33), and the output data from the evaluation tool 25 is compared with its expected value (step S34), thereby checking whether this system LSI operates normally.

The evaluation result finally obtained in step S34 of evaluation step S3 as described above is transmitted to the IP user who has issued the evaluation request as shown in FIG. 2. On the basis of this evaluation result, the IP user makes a secondary determination of whether to finally purchase the IP data as a purchase candidate. That is, if the system LSI which is presumably realized on the basis of the IP data as a purchase candidate is found to normally operate, the IP user decides to purchase this IP data as a purchase candidate.

### (Contract Step S4)

When the IP user selects IP data to be purchased as described above, a contract is made between this IP user and an IP provider who provides the IP data. This contract is intermediated by the IP intermediation service provider. The contract processor 26 for performing this intermediation service asks the IP provider and IP user to sign a contract document (called a standard contract document) having a format standardized between the members by the IP intermediation service provider, thereby intermediating the contract. The standard contract document basically includes all business conditions except for negotiation for the conditions of compensation. Therefore, individual negotiation between the IP provider and IP user as the dealer and buyer, respectively, of the IP data can be omitted.

In contract step S4, signing of the standard contract document by the IP provider and IP user can be performed on-line across the network 10, or by using a paper standard contract document. Alternatively, both the on-line signing and paper document signing can be used.

When the contract is completed as above, the IP data transmitted from the IP provider and held in the IP intermediation service provider is transferred to the IP user. This IP data transfer can be performed on-line across the network 10 or off-line by storing the data in a recording medium such as an MO or CD-R. Alternatively, the digital data and document can be combined.

### (Value-Added Service Step S5)

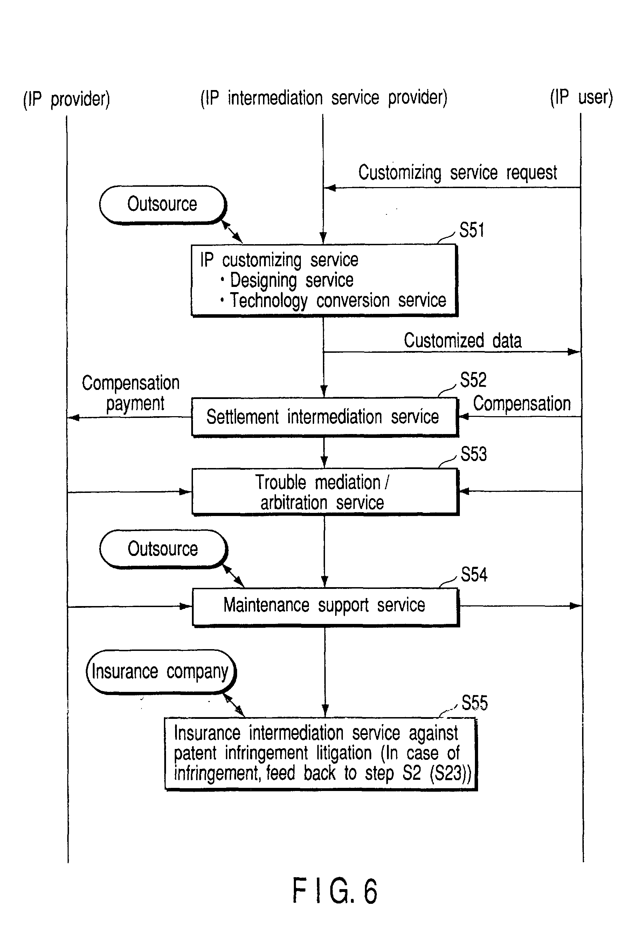

The processing explained so far is the front end service. After this front end service, the value-added service processor 27 in the IP intermediation service provider performs, if necessary, a value-added service as the back end service. FIG. 6 shows a practical process procedure of value-added service step S5. In this example, value-added service step S5 includes five services indicated by steps S51 to S55.

First, when a customizing request from an IP user is received in step S51, IP data purchased by this IP user is customized, and the customized IP data (customized data) is transmitted to the IP user. This IP customizing service includes a designing service and technology conversion service.

For example, the designing service adds circuits to and/or changes partial design of circuits of a system LSI realized by the IP data purchased by the IP user, in accordance with the instruction contents of the customizing request. The technology conversion service converts the LSI technology of the system LSI realized by the IP data purchased by the IP user, in accordance with the instruction contents of the customizing request. More specifically, this technology conversion service converts the design rule (minimum line width) of the LSI such that 0.25 µm → 0.18 µm or 0.18 µm → 0.12 µm. Although these customizing services can be performed by the IP intermediation service provider, they may also be entrusted to a customizing sourcing or member authorized by the IP provider.

By these customizing services, an IP user can easily obtain design data of a system LSI which this IP user wants to develop and fabricate. Conventionally, IP providers often handle IP data specification change and function addition requests from IP users, and obtain matching with the design rules of semiconductor manufactures. Presently, no satisfactory results are obtained in both time and quality owing to the resource neck and/or the lack of technical knowledge of these IP providers. This embodiment solves these problems by the customizing services as described above.

In step S52, a settlement intermediation service is performed. This settlement intermediation service performs intermediation for determining whether to use a royalty system or lump sum system as payment of compensation from the IP user to the IP provider, and intermediation for collecting the compensation. The IP intermediation service provider transfers the compensation to the IP user after subtracting the intermediation fee of the IP intermediation service provider, the fee of the customizing service in step S51, and the like.

In step S53, a trouble mediation/arbitration service is performed. This service is an intermediation service for solving various problems concerning, e.g., the traded IP data itself and payment of the compensation, occurring between the IP provider and IP user.

Step S54 is a service for providing maintenance support to the IP data purchased by the IP user and/or the system LSI developed using the IP data. This service is done by using, e.g., maintenance outsourcing.

In step S55, a patent infringement litigation insurance intermediation service is performed. This is intermediation for nonlife insurance when a developed product or behavior of an IP provider or IP user infringes with a patent (e.g., a patent of a circuit, apparatus, fabrication method, or software pertaining to a system LSI fabricated on the basis of IP data, including utility model registration) held by a third party in relation to the IP data purchased by the IP user and infringement litigation is started.

In this embodiment, if patent infringement is effected in step S55 and the insurance is paid to the patentee, the corresponding IP data is regarded as having a high economical value, and information indicating this fact is fed back to registration/disclosure step S2 in FIG. 2 (particularly, step S23 in FIG. 4) and reflected on the above-mentioned "(c) Price Information of IP Data" in the statistical data as the IP catalogue. Consequently, the price information (e.g., the average price) of this IP data to be disclosed after that is rewritten with a higher price. By thus rewriting the price information of IP data in accordance with that information of the presence/absence of patent infringement, which is obtained during the course of the patent infringement litigation insurance intermediation service in step S55, it is possible to raise the accuracy of statistical data concerning the IP data and disclose more effective information to IP users.

As has been explained above, the present invention can provide an electronic commerce mechanism for effectively circulating semiconductor IPs.

That is, an examination including, e.g., a function check, performance check, and silicon authentication is performed for system LSIs realized on the basis of semiconductor IPs developed and provided by a large number of IP providers and having unknown quality and the like, and only a semiconductor IP which has passed this examination is registered and disclosed to IP users. Accordingly, each IP user can search for a semiconductor IP having quality guaranteed to some extent as a purchase candidate. This reduces the possibility of acquiring a low-quality semiconductor IP.

IP data is disclosed as statistical data including, e.g., information concerning application fields, the number of transactions, and the price, and information such as the results of examination in the examination step and infringements with patents held by third parties. This allows an IP user to select a semiconductor IP optimum for a system LSI which this IP user intends to newly develop.

Of disclosed semiconductor IPs, a system LSI realized on the basis of at least a semiconductor IP selected as a purchase candidate by an IP user is evaluated by using a predetermined evaluation tool. Accordingly, the IP user can acquire a semiconductor IP whose operation when this semiconductor IP is formed into a system LSI is guaranteed.

On the basis of a customizing request from an IP user, customizing services such as a designing service and technology conversion service are performed, in accordance with the instruction contents indicated by the customizing request, for a system LSI realized by IP data purchased by this IP user, and the customized data is transmitted to the IP user. This permits the IP user to readily acquire design data of the system LSI which this IP user wants to develop and fabricate.

### Industrial Applicability

As has been described above, the present invention is effective in the technical field in which electronic commerce of a semiconductor IP as a design property of LSI is performed using a computer system, and particularly effective in the technical field of a method and system for intermediating electronic commerce of a semiconductor IP between an IP provider who provides the semiconductor IP and an IP user who uses the semiconductor IP, a semiconductor IP examination method, evaluation method, and customizing method in the system, a method by which an IP provider provides a semiconductor IP, and a method by which an IP user acquires a semiconductor IP.

## Claims

1. A semiconductor IP electronic commerce intermediation method of intermediating electronic commerce of a semiconductor IP between an IP provider who provides the semiconductor IP and an IP user who uses the semiconductor IP, comprising the steps of:
examining a semiconductor IP provided by an IP provider;
registering a semiconductor IP which has passed the examination; and
disclosing the registered semiconductor IP in a predetermined format to an IP user in order to subject the semiconductor IP to selection of a semiconductor IP as a purchase candidate by the IP user.

2. A semiconductor IP electronic commerce intermediation method according to claim 1, wherein in the examination step, at least one of a function check, performance check, and silicon authentication is executed for a system LSI realized on the basis of a semiconductor IP provided by an IP provider.

3. A semiconductor IP electronic commerce intermediation method according to claim 1, wherein the disclosure step comprises disclosing the registered semiconductor IP as statistical data containing at least one of information concerning the application field, the number of transactions, and the price of the semiconductor IP, information concerning the result of examination in the examination step, and information concerning an infringement with a patent held by a third party.

4. A semiconductor IP electronic commerce intermediation method according to claim 1, further comprising the IP customizing service step of executing a service for receiving a customizing request from an IP user, customizing IP data purchased by the IP user, and transmitting the obtained customized data to the IP user.

5. A semiconductor IP electronic commerce intermediation method according to claim 4, wherein in the IP customizing service step, at least one of a designing service for performing processing including addition of a circuit and a partial design change of a circuit for a system LSI realized by the IP data purchased by the IP user, in accordance with instruction contents indicated by the customizing request, and a technology conversion service for performing processing including conversion of the design rule of the system LSI realized by the IP data purchased by the IP user, in accordance with instruction contents indicated by the customizing request is executed.

6. A semiconductor IP electronic commerce intermediation method of intermediating electronic commerce of a semiconductor IP between an IP provider who provides the semiconductor IP and an IP user who uses the semiconductor IP, comprising the steps of:
examining a semiconductor IP provided by an IP provider;
registering a semiconductor IP which has passed the examination;
disclosing the registered semiconductor IP in a predetermined format to an IP user in order to subject the semiconductor IP to selection of a semiconductor IP as a purchase candidate by the IP user; and
evaluating a system LSI realized on the basis of at least a semiconductor IP selected as a purchase candidate by the IP user from the disclosed semiconductor IPs.

7. A semiconductor IP electronic commerce intermediation method according to claim 6, wherein in the examination step, at least one of a function check, performance check, and silicon authentication is executed for a system LSI realized on the basis of a semiconductor IP provided by an IP provider.

8. A semiconductor IP electronic commerce intermediation method according to claim 6, wherein the disclosure step comprises disclosing the registered semiconductor IP as statistical data containing at least one of information concerning the application field, the number of transactions, and the price of the semiconductor IP, information concerning the result of examination in the examination step, and information concerning an infringement with a patent held by a third party.

9. A semiconductor IP electronic commerce intermediation method according to claim 6, wherein in the evaluation step, a semiconductor IP to be evaluated is transported to a predetermined evaluation tool, and test data is input to the evaluation tool to compare output data from the evaluation tool with an expected value of the output data, thereby checking the operation of a system LSI realized on the basis of the IP data.

10. A semiconductor IP electronic commerce intermediation method according to claim 6, further comprising the IP customizing service step of executing a service for receiving a customizing request from an IP user, customizing IP data purchased by the IP user, and transmitting the obtained customized data to the IP user.

11. A semiconductor IP electronic commerce intermediation method according to claim 9, wherein in the IP customizing service step, at least one of a designing service for performing processing including addition of a circuit to and a partial design change of a circuit of a system LSI realized by the IP data purchased by the IP user, in accordance with instruction contents indicated by the customizing request, and a technology conversion service for performing processing including conversion of the design rule of the system LSI realized by the IP data purchased by the IP user, in accordance with instruction contents indicated by the customizing request is executed.

12. A semiconductor IP electronic commerce intermediation system constructed by a computer system for intermediating electronic commerce of a semiconductor IP between an IP provider who provides the semiconductor IP and an IP user who uses the semiconductor IP, comprising:
means for examining a semiconductor IP provided by an IP provider;
means for registering a semiconductor IP which has passed the examination; and
means for disclosing the registered semiconductor IP in a predetermined format to an IP user in order to subject the semiconductor IP to selection of a semiconductor IP as a purchase candidate by the IP user.

13. A semiconductor IP electronic commerce intermediation system realized by a computer system for intermediating electronic commerce of a semiconductor IP between an IP provider who provides the semiconductor IP and an IP user who uses the semiconductor IP, comprising:
means for examining a semiconductor IP provided by an IP provider;
means for registering a semiconductor IP which has passed the examination;
means for disclosing the registered semiconductor IP in a predetermined format to an IP user in order to subject the semiconductor IP to selection of a semiconductor IP as a purchase candidate by the IP user; and
means for evaluating a system LSI realized on the basis of at least a semiconductor IP selected as a purchase candidate by the IP user from the disclosed semiconductor IPs.

14. A semiconductor IP examination method of examining a semiconductor IP transmitted from an IP provider who provides the semiconductor IP, comprising:
the step of performing a function check for a system LSI realized on the basis of the semiconductor IP;
the step of performing a performance check for the system LSI realized on the basis of the semiconductor IP; and
the silicon authentication step of fabricating a system LSI sample by mounting a circuit on a silicon semiconductor chip on the basis of circuit pattern data included in the semiconductor IP, and checking the operation of the system LSI.

15. A semiconductor IP disclosure method of disclosing information concerning a semiconductor IP transmitted from an IP provider who provides the semiconductor IP, comprising disclosing the information concerning the semiconductor IP as statistical data containing at least one of information concerning the application field, the number of transactions, and the price of the semiconductor IP, information concerning the result of examination, and information concerning an infringement with a patent held by a third party.

16. A semiconductor IP evaluation method of evaluating a semiconductor IP transmitted from an IP provider who provides the semiconductor IP, comprising the steps of:
transporting at least a portion of a semiconductor IP to be evaluated to a predetermined evaluation tool; and
inputting test data to the evaluation tool to compare output data from the evaluation tool with an expected value of the output data, thereby checking the operation of a system LSI realized on the basis of the IP data.

17. A semiconductor IP evaluation method of evaluating a semiconductor IP transmitted from an IP provider who provides the semiconductor IP, comprising the steps of:
transporting at least a portion of a semiconductor IP to be evaluated to a predetermined evaluation tool;
incorporating, into the evaluation tool, data of a circuit uniquely designed by an IP user who uses the semiconductor IP; and
inputting test data to the evaluation tool to compare output data from the evaluation tool with an expected value of the output data, thereby checking the operation of a system LSI realized on the basis of the IP data combined with the uniquely designed circuit data.

18. A semiconductor IP customizing method of executing a service which receives a customizing request from an IP user, customizes IP data purchased by the IP user, and transmits the obtained customized data to the IP user, comprising the steps of:
performing a designing process which includes addition of a circuit and a partial design change of a circuit for a system LSI realized by the IP data purchased by the IP user, in accordance with instruction contents indicated by the customizing request; and
performing a technology conversion process which includes conversion of the design rule of the system LSI realized by the IP data purchased by the IP user, in accordance with instruction contents indicated by the customizing request.

19. A semiconductor IP providing method of providing a semiconductor IP from an IP provider who provides the semiconductor IP to an IP user who uses the semiconductor IP, comprising:
requesting an IP intermediation service provider for intermediating electronic commerce of a semiconductor IP between the IP provider and the IP user to examine the semiconductor IP;
registering a semiconductor IP which has passed the examination and disclosing the semiconductor IP to the IP user by the IP intermediation service provider;
making a contract with the IP user for a semiconductor IP selected from the disclosed semiconductor IPs by the IP user through the intermediation of the IP intermediation service provider; and
providing to the IP user the semiconductor IP for which the contract is made.

20. A semiconductor IP acquiring method by which an IP user who uses a semiconductor IP acquires the semiconductor IP from an IP provider who provides the semiconductor IP, comprising:
selecting a desired semiconductor IP as a purchase candidate from semiconductor IPs registered and disclosed after being examined by an IP intermediation service provider who intermediates semiconductor. IP electronic commerce between the IP provider and IP user;
requesting the IP intermediation service provider to evaluate the desired semiconductor IP selected, and receiving the evaluation result from the IP intermediation service provider;
finally determining from the evaluation result whether to purchase the semiconductor IP as the purchase candidate; and
acquiring the semiconductor IP to be purchased by making a contract with the IP provider through the intermediation of the IP intermediation service provider.
